(19) Europäisches Patentamt
European Patent Office
Office européen des brevets

(11) Veröffentlichungsnummer: **0 001 566**
**B1**

(12) # EUROPÄISCHE PATENTSCHRIFT

(21) Anmeldenummer: **78100980.8**

(22) Anmeldetag: **25.09.78**

(51) Int. Cl.³: **C 07 C 69/74,** A 01 N 31/04

(54) **Cyclobutancarbonsäurederivate, Verfahren zu ihrer Herstellung und ihre Verwendung als Insektizide**

(30) Priorität: **06.10.77 DE 2745008**

(43) Veröffentlichungstag der Anmeldung:
**02.05.79 Patentblatt 79/09**

(45) Bekanntmachung des Hinweises auf die Patenterteilung:
**26.11.80 Patentblatt 80/24**

(84) Benannte Vertragsstaaten:
**BE CH DE FR GB NL**

(56) Entgegenhaltungen:
**DE - A - 2 733 740**
**FR - A - 2 003 855**
**FR - A - 2 012 285**
**US - A - 2 404 588**

(73) Patentinhaber: **BAYER AG**
**Zentralbereich Patente, Marken und Lizenzen**
**D - 5090 Leverkusen 1, Bayerwerk (DE)**

(72) Erfinder: **Mues, Volker, Dr.**
**Mareestrasse 61**
**D - 5600 Wuppertal 1 (DE)**
**Behrenz, Wolfgang, Dr.**
**Untergründemich 14**
**D - 5063 Overath (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 001 566 B1

# 0 001 566

Cyclobutancarbonsäurederivate, Verfahren zu ihrer Herstellung und ihre Verwendung als Insektizide

Die vorliegende Erfindung betrifft neue Cyclobutancarbonsäurederivate, Verfahren zu ihrer Herstellung und ihre Verwendung als Insektizide.

Es ist bereits bekannt, daß Cyclopropancarbonsäurederivate, z.B. 2,2-Dimethyl-3-(2-mylpropenyl)-cyclopropancarbonsäure-3,4,5,6-tetrahydrophthalimidomethylester, insektizide Eigenschaften besitzen [vergleiche Commercial and Experimental Organic Insecticides (1966 Revision) S. 168].

Es wurden nun die neuen Cyclobutancarbonsäurederivate der Formel (I)

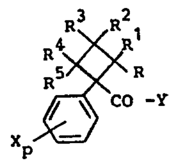

(I)

gefunden, in welcher

X für gleiche oder verschiedene Reste aus der Gruppe Wasserstoff, Halogen, Cyan, Nitro, niederes Alkyl, Alkenyl, Alkoxy, Alkylmercapto, Alkylsulfoxy, Alkoxyalkyl, niederes Halogenalkyl, Halogenalkoxy, Halogenalkylmercapto, Aryl oder Aryloxy oder zwei benachbarte Reste X gemeinsam für Methylendioxy, Trimethylen oder Tetramethylen stehen, steht und

R bis $R^5$ gleich oder verschieden sind und für Wasserstoff oder niederes Alkyl stehen und

Y für einen Alkoholrest steht, der üblicherweise bei natürlichen und synthetischen Pyrethroiden Verwendung findet und

p für eine ganze Zahl von 1—5 steht.

Die allgemeine Formel (I) schließt dabei die verschiedenen möglichen optischen Isomeren und Mischungen dieser Komponenten ein.

Die neuen Verbindungen der allgemeinen Formel (I) werden erhalten, indem man eine Cyclobutancarbonsäure der Formel (II)

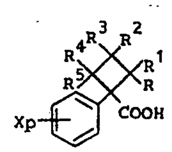

(II)

in welcher

R bis $R^5$, X und p die oben angegebene Bedeutung haben,

oder ihr reaktionsfähiges Derivat mit einem Alkohol der Formel (III)

Y—H (III)

in welcher

Y die oben angegebene Bedeutung hat

oder dessen reaktionsfähigem Derivat umsetzt.

Reaktionsfähige Derivate der Cyclobutancarbonsäuren der allgemeinen Formel (II) schließen die entsprechenden Säurehalogenide, Anhydride, Ester niedrig siedender Alkohole, Alkalimetall-, Silber- oder tert.-Aminsalze ein.

Reaktionsfähige Derivate der Alkohole der Formel (III) schließen die entsprechenden Halogenide oder Sulfonsäureester ein.

Die erfindungsgemäßen Verbindungen der allgemeinen Formel (I) besitzen gute insektizide Wirksamkeit. Dabei stellt die Säurekomponente der allgemeinen Formel (II) ein wichtiges aktives Strukturelement dar. Die Alkoholkomponente der Formel (III) entspricht derjenigen, die aus den natürlichen und synthetischen Pyrethroiden bekannt sind. Zu diesen Alkoholen der Formel (III) gehören z.B. solche in denen Y für folgende Reste steht:

(IV) 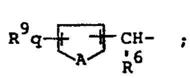 ; (V) 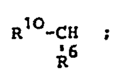 ; 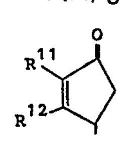 (VI)

in welchen
$R^6$ für Wasserstoff, Äthinyl oder Cyan steht und
$R^9$ für gleiche oder verschiedene Reste aus der Gruppe Allyl, Propargyl, Benzyl, Thenyl, Furylmethyl, Phenoxy oder Phenylmercapto, die gegebenenfalls durch Halogen, Alkyl, Alkoxy, Halogenalkyl, Cyan oder Nitro substituiert sein können, steht und
q für ganze Zahlen von 1—4 steht und
A für O, S oder —CH=CH— steht und
$R^{10}$ für einen Phthalimide, Thiophthalimid, Di- oder Tetrahydrophthalimid oder Dialkylmaleinimidrest, die gegebenenfalls substituiert sein können, steht und
$R^{11}$ für Alkyl, Alkenyl, Alkinyl oder Aralkyl steht und
$R^{12}$ für Wasserstoff oder Methyl steht.

Zur Herstellung der Cyclobutancarbonsäurederivate der allgemeinen Formel (I) wird die Veresterung der Säure der allgemeinen Formel (II) mit dem Alkohol der allgemeinen Formel (III), vorzugsweise in einem geeigneten inerten Lösungsmittel bei Raumtemperatur oder erhöhter Temperatur und unter geeigneten wasserabspaltenden Bedingungen, z.B. in Gegenwart von Dicyclohexylcarbodiimid, durchgeführt. Bei Verwendung eines Säurehalogenids als reaktionsfähigem Derivat der Säure wird die Umsetzung mit dem Alkohol bei Raumtemperatur und in Gegenwart eines Säureakzeptors durchgeführt. Man erhält in hoher Ausbeute den entsprechenden Ester. Als Säurehalogenide werden die Säurechloride bevorzugt. Die Umsetzung wird vorzugsweise in Gegenwart eines inerten Lösungsmittels durchgeführt. Bei Verwendung des Esters der Säure der allgemeinen Formel (II) mit einem niedrig siedenden Alkohol, wie Methanol oder Äthanol, als reaktionsfähigem Derivat der Säure kann die entsprechende Verbindung der allgemeinen Formel (I) in hoher Ausbeute durch Erhitzen des Esters mit dem Alkohol der allgemeinen Formel (III) in Gegenwart einer Base, vorzugsweise dem Alkalimetallalkoholat, das dem niedrig siedenden Alkohol des eingesetzten Esters entspricht, oder in Gegenwart von Natriumhydrid in einem inerten Lösungsmittel, wie Toluol und unter Abtrennung des bei der Umsetzung freigesetzten niedrig siedenden Alkohols durch fraktionierte Destillation hergestellt werden.

Bei Verwendung eines Säureanhydrids als reaktionsfähigem Derivat der Säure der allgemeinen Formel (II) können die Verbindungen der allgemeinen Formel (I) durch Umsetzen des Säureanhydrids mit dem Alkohol der allgemeinen Formel (III) bei Raumtemperatur oder vorzugsweise unter Erhitzen und in Gegenwart eines Lösungsmittels, wie Toluol oder Xylol, hergestellt werden. Bei Verwendung eines Halogenids oder Sulfonsäureesters des Alkohols der allgemeinen Formel (III) wird die Säure der allgemeinen Formel (II) im allgemeinen in Form eines Alkalimetallsalzes, Silbersalzes oder eines Salzes mit einem tertiären Amin verwendet. Diese Salze können in situ durch Zugabe der entsprechenden Base zur Säure der allgemeinen Formel (II) hergestellt werden. In diesem Fall wird vorzugsweise ein Lösungsmittel, wie Benzol, Aceton oder Dimethylformamid, verwendet, und die Umsetzung wird vorzugsweise unter Erhitzen des Reaktionsgemisches bis zum Siedepunkt oder unterhalb des Siedepunktes des verwendeten Lösungsmittels durchgeführt. Bevorzugte Halogenide der Alkohole der allgemeinen Formel (III) sind die Chloride oder Bromide.

Besonders bevorzugte Cyclobutancarbonsäurederivate der allgemeinen Formel (I) lassen sich unter der folgenden allgemeinen Formel (VII) zusammenfassen:

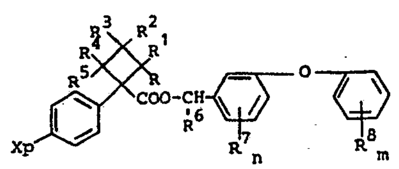

(VII)

in welcher
R bis $R^6$ und X und p die oben angegebene Bedeutung besitzen und
$R^7$ und $R^8$ unabhängig voneinander für Wasserstoff oder Halogen stehen und
n für eine ganze Zahl von 1—4,
m für eine ganze Zahl von 1—5 steht.

Bevorzugt werden die neuen Cyclobutancarbonsäurederivate der Formel (I), und dabei insbesondere diejenigen der allgemeinen Formel (VII) erhalten, wenn man beispielsweise

a) 1-Halogenphenyl-cyclobutancarbonsäurehalogenide der Formel (VIII)

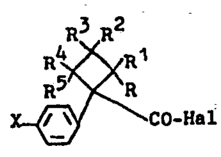

(VIII)

in welcher
X und R bis $R^5$ die oben angegebene Bedeutung haben und
Hal für Halogen, vorzugsweise Chlor oder Brom,

stehen, mit Alkoholen der Formel (III) und insbesondere Phenoxybenzylalkoholen der Formel (IX)

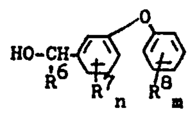

(IX)

in welcher
$R^6$ bis $R^8$, n und m die oben angegebene Bedeutung haben,
gegebenenfalls in Gegenwart eines Säureakzeptors und gegebenenfalls in Gegenwart eines Lösungsmittels umsetzt, oder wenn man

b) 1-Halogenphenyl-cyclobutancarbonsäure der Formel (X)

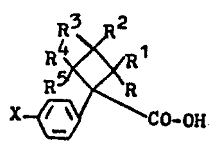

(X)

in welcher
X und R bis $R^5$ die oben angegebene Bedeutung haben,
gegebenenfalls in Form der Alkali, Erdalkali- oder Ammoniumsalze oder gegebenenfalls in Gegenwart eines Säureaktzeptors mit Alkoholderivaten der allgemeinen Formel

$$Z—X^1$$

und insbesondere mit Phenoxybenzylderivaten der Formel (XI)

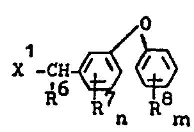

(XI)

in welcher
$R^6$ bis $R^8$, n und m die oben angegebene Bedeutung haben,
Z die Bedeutung Z—$O^-$ = Y hat und
$X^1$ für Halogen, vorzugsweise Chlor oder Brom, oder für die Trialkylammoniumhalogenid-Gruppe steht, worin Alkyl Niederalkyl und das Halogenid die Bedeutung von $X^1$ hat,
gegebenenfalls in Gegenwart eines Losungsmittels umsetzt.

Verwendet man beispielsweise 1-(4-Chlorphenyl)-cyclobutancarbonsäurechlorid und 3-(4-Fluorphenoxy)-4-fluor-α-cyanbenzylalkohol oder 1-(4-Chlorphenyl)-cyclobutancarbonsäure und 3-Phenoxybenzylbromid bzw. 3-Phenoxybenzyl-triäthylammoniumbromid als Ausgangsstoffe, so kann der Reaktionsverlauf durch die folgenden Formelschemata wiedergegeben werden:

a) 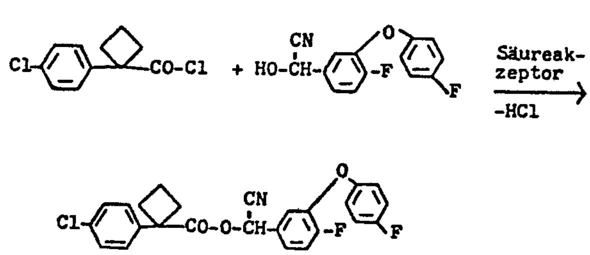

b) 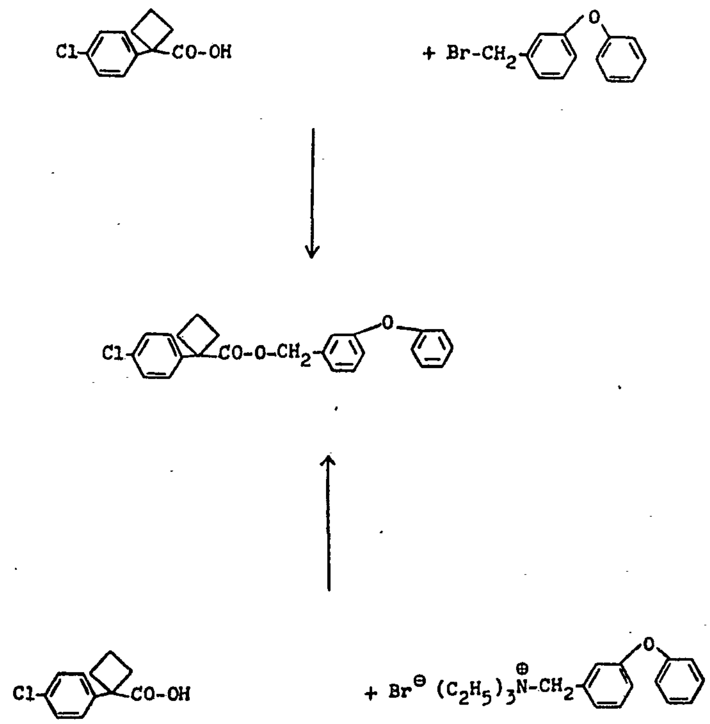

Ganz besonders bevorzugt werden zur Herstellung der erfindungsgemäßen Verbindungen der Formel (I) Ausgangsverbindungen der Formeln (VIII)—(XI) eingesetzt, in denen
$R^6$ für Wasserstoff oder Cyan,
$R^5$ und $R^7$ für Wasserstoff,
$R^8$ für Wasserstoff oder Fluor,
n für eine ganze Zahl von 4 und
m für eine ganze Hal von 1 bis 5, stehen.

Die als Ausgangsprodukte zu verwendenden Cyclobutancarbonsäuren der allgemeinen Formel (II) bzw. ihre reaktiven Derivate sind z.T. bekannt, können aus den meist bekannten Cyclobutancarbonsäurenitrilen [vergleiche D.E. Butler u.J.c. Pollatz, J. org. Chem., Vol. 36, Nr. 9 (1971) Seiten 1308 und 1309] durch Verseifung zu den Carbonsäuren und z.B. durch anschließende Umsetzung mit Halogenierungsmitteln, wie z.B. Thionylchlorid, nach literaturbekannten Verfahren hergestellt werden. Als Beispiele für besonders bevorzugte Cyclobutancarbonsäuren der allgemeinen Formel (II) bzw. ihrer reaktionsfähigen Derivate seien im einzelnen genannt:

1-(4-Fluorphenyl)-cyclobutancarbonsäure,
1-(4-Chlorphenyl)-cyclobutancarbonsäure,
1-(4-Bromphenyl)-cyclobutancarbonsäure,
1-(4-Fluorphenyl)-2-methyl-cyclobutancarbonsäure,
1-(4-Chlorphenyl)-2-methyl-cyclobutancarbonsäure,
1-(4-Bromphenyl)-2-methyl-cyclobutancarbonsäure,
1-(4-Fluorphenyl)-2,3-dimethyl-cyclobutancarbonsäure,
1-(4-Chlorphenyl)-2,3-dimethyl-cyclobutancarbonsäure,
1-(4-Bromphenyl)-2,3-dimethyl-cyclobutancarbonsäure,
1-(4-Fluorphenyl)-3,3-dimethyl-cyclobutancarbonsäure,
1-(4-Chlorphenyl)-3,3-dimethyl-cyclobutancarbonsäure,
1-(4-Bromphenyl)-3,3-dimethyl-cyclobutancarbonsäure,
1-(4-Fluorphenyl)-3-methyl-cyclobutancarbonsäure,
1-(4-Chlorphenyl)-3-methyl-cyclobutancarbonsäure,
1-(4-Bromphenyl)-3-methyl-cyclobutancarbonsäure,
1-(4-Fluorphenyl)-2,3,4-trimethyl-cyclobutancarbonsäure,
1-(4-Chlorphenyl)-2,3,4-trimethyl-cyclobutancarbonsäure,
1-(4-Bromphenyl)-2,3,4-trimethyl-cyclobutancarbonsäure,
1-(4-Fluorphenyl)-cyclobutancarbonsäurechlorid bzw. -bromid,
1-(4-Chlorphenyl)-cyclobutancarbonsäurechlorid bzw. -bromid,
1-(4-Bromophenyl)-cyclobutancarbonsäurechlorid bzw. -bromid,
1-(4-Fluorphenyl)-2-methyl-cyclobutancarbonsäurechlorid bzw. -bromid,

1-(4-Chlorphenyl)-2-methyl-cyclobutancarbonsäurechlorid bzw. -bromid,
1-(4-Bromphenyl)-2-methyl-cyclobutancarbonsäurechlorid bzw. -bromid,
1-(4-Fluorphenyl)-2,3-dimethyl-cyclobutancarbonsäurechlorid bzw. -bromid,
1-(4-Chlorphenyl)-2,3-dimethyl-cyclobutancarbonsäurechlorid bzw. -bromid,
1-(4-Bromphenyl)-2,3-dimethyl-cyclobutancarbonsäurechlorid bzw. -bromid,
1-(4-Fluorphenyl)-3,3-dimethyl-cyclobutancarbonsäurechlorid bzw. -bromid,
1-(4-Chlorphenyl)-3,3-dimethyl-cyclobutancarbonsäurechlorid bzw. -bromid,
1-(4-Bromphenyl)-3,3-dimethyl-cyclobutancarbonsäurechlorid bzw. -bromid,
1-(4-Fluorphenyl)-3-methyl-cyclobutancarbonsäurechlorid bzw. -bromid,
1-(4-Chlorphenyl)-3-methyl-cyclobutancarbonsäurechlorid bzw. -bromid,
1-(4-Bromphenyl)-3-methyl-cyclobutancarbonsäurechlorid bzw. -bromid,
1-(4-Fluorphenyl)-2,3,4-trimethyl-cyclobutancarbonsäurechlorid bzw. -bromid,
1-(4-Chlorphenyl)-2,3,4-trimethyl-cyclobutancarbonsäurechlorid bzw. -bromid,
1-(4-Bromphenyl)-2,3,4-trimethyl-cyclobutancarbonsäurechlorid bzw. -bromid,

Die weiterhin als Ausgangsstoffe zu verwendenden Alkohole der allgemeinen Formel (III) sind teilweise bekannt (vergleiche Deutsche Offenlegungsschrift 2 547 534 sowie Chemical Society Review Vol. 7 Haft 4 (1978) Seiten 473—505 wo u.a. die allgemeinen Strukturmerkmale der bei Pyrethroiden üblichen Alkohole erläutert werden) oder können auf an sich bekannte Weise hergestellt werden. Beispielsweise können die Alkohole der allgemeinen Formel (IX) aus den entsprechenden Phenoxybenzylhalogeniden, die aus den Phenoxytoluolen z.B. mit Bromsuccinimid hergestellt werden, durch Umsetzung mit Hexamethylentetramin zu den Aldehyden nach folgendem Formelschema erhalten werden:

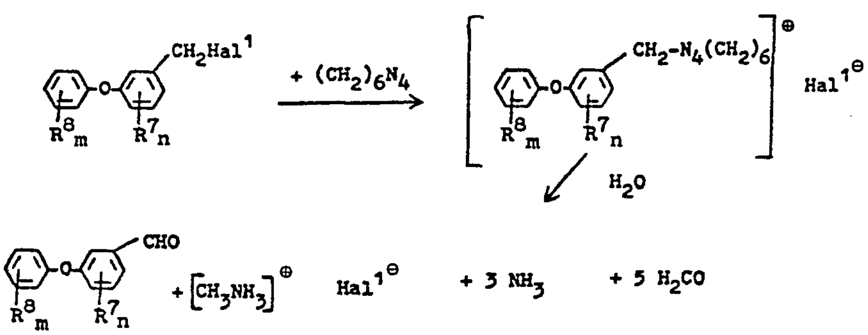


worin
$R^7$, $R^8$, n und m die oben angegebene Bedeutung haben und
$Hal^1$ für Halogen steht.
Die so erhaltenen Aldehyde werden dann.
a[1]) für den Fall, daß $R^6$ für Wasserstoff steht, mit einem komplexen Metallhydrid in einem inerten Losungsmittel reduziert oder
b[1]) für den Fall, daß $R^6$ für Cyan steht, mit einem Alkalimetallcyanid, z.B. Natrium- oder Kaliumcyanid, in Gegenwart einer Säure gegebenenfalls unter Zusatz eines Lösungsmittels umgesetzt oder
c[1]) für den Fall, daß $R^6$ für Athinyl steht, mit einer Athinylverbindung der Formel

$$HC{\equiv}C{-}MgHal^2 \qquad \text{(VIII)}$$

in welcher
$Hal^2$ für Halogen steht,
in einem geeigneten Lösungsmittel umgesetzt.

Als Beispiele für besonders bevorzugte Alkohole der allgemeinen Formel (III) bzw. ihre reaktionsfähigen Derivate seien im einzelnen genannt:
3-Phenoxy-benzylalkohol,
3-(4-Fluorphenoxy)-benzylalkohol,
3-(3-Fluorphenoxy)-benzylalkohol,
3-(2-Fluorphenoxy)-benzylalkohol,
3-Phenoxy-4-fluor-benzylalkohol,
3-(4-Fluorphenoxy)-4-fluor-benzylalkohol,
3-(3-Fluorphenoxy)-4-fluor-benzylalkohol,
3-(2-Fluorphenoxy)-4-fluor-benzylalkohol,
3-Phenoxy-$\alpha$-cyan-benzylalkohol,
3-(4-Fluorphenoxy)-$\alpha$-cyan-benzylalkohol,
3-(3-Fluorphenoxy)-$\alpha$-cyan-benzylalkohol,
3-(2-Fluorphenoxy)-$\alpha$-cyan-benzylalkohol,

3-Phenoxy-4-fluor-$\alpha$-cyan-benzylalkohol,
3-(4-Fluorphenoxy)-4-fluor-$\alpha$-cyan-benzylalkohol,
3-(3-Fluorphenoxy)-4-fluor-$\alpha$-cyan-benzylalkohol,
3-(2-Fluorphenoxy)-4-fluor-$\alpha$-cyan-benzylalkohol,
3-Phenoxy-6-fluor-$\alpha$-cyan-benzylalkohol,
3-(4-Fluorphenoxy)-6-fluor-$\alpha$-cyan-benzylalkohol,
3-(3-Fluorphenoxy)-6-fluor-$\alpha$-cyan-benzylalkohol,
3-(2-Fluorphenoxy)-6-fluor-$\alpha$-cyan-benzylalkohol,
3-Phenoxy-$\alpha$-äthinyl-benzylalkohol,
3-(4-Fluorphenoxy)-$\alpha$-äthinyl-benzylalkohol,
3-(3-Fluorphenoxy)-$\alpha$-äthinyl-benzylalkohol,
3-(2-Fluorphenoxy)-$\alpha$-äthinyl-benzylalkohol,
3-Phenoxy-4-fluor-$\alpha$-äthinyl-benzylalkohol,
3-(4-Fluorphenoxy)-4-fluor-$\alpha$-äthinyl-benzylalkohol,
3-(3-Fluorphenoxy)-4-fluor-$\alpha$-äthinyl-benzylalkohol,
3-(2-Fluorphenoxy)-4-fluor-$\alpha$-äthinyl-benzylalkohol,
3-Phenoxy-6-fluor-$\alpha$-äthinyl-benzylalkohol,
3-(4-Fluorphenoxy)-6-fluor-$\alpha$-äthinyl-benzylalkohol,
3-(3-Fluorphenoxy)-6-fluor-$\alpha$-äthinyl-benzylalkohol,
3-(2-Fluorphenoxy)-6-fluor-$\alpha$-äthinyl-benzylalkohol,
3-Phenoxy-benzyl-,
3-(4-Fluorphenoxy)-benzyl-,
3-(3-Fluorphenoxy)-benzyl-,
3-(2-Fluorphenoxy)-benzyl-,
3-Phenoxy-4-fluor-benzyl-,
3-(4-Fluorphenoxy)-4-fluor-benzyl-,
3-(3-Fluorphenoxy)-4-fluor-benzyl-,
3-(2-Fluorphenoxy)-4-fluor-benzyl-,
3-Phenoxy-$\alpha$-cyan-benzyl-,
3-(4-Fluorphenoxy)-$\alpha$-cyan-benzyl-,
3-(3-Fluorphenoxy)-$\alpha$-cyan-benzyl-,
3-(2-Fluorphenoxy)-$\alpha$-cyan-benzyl-,
3-Phenoxy-4-fluor-$\alpha$-cyan-benzyl-,
3-(4-Fluorphenoxy)-4-fluor-$\alpha$-cyan-benzyl-,
3-(3-Fluorphenoxy)-4-fluor-$\alpha$-cyan-benzyl-,
3-(2-Fluorphenoxy)-4-fluor-$\alpha$-cyan-benzyl-,
3-Phenoxy-6-fluor-$\alpha$-cyan-benzyl-,
3-(4-Fluorphenoxy)-6-fluor-$\alpha$-cyan-benzyl-,
3-(3-Fluorphenoxy)-6-fluor-$\alpha$-cyan-benzyl- und
3-(2-Fluorphenoxy)-6-fluor-$\alpha$-cyan-benzyl-chlorid, -bromid oder -trialkylammoniumhalogenid.

Zur Herstellung der erfindungsgemäßen Cyclobutancarbonsäurederivate können als Säureakzeptoren alle üblichen Säurebindemittel Verwendung finden. Besonders bewährt haben sich Alkalicarbonate und -alkoholate, wie Natrium- und Kaliumcarbonat, Natrium- und Kaliummethylat bzw -äthylat, ferner aliphatische, aromatische oder heterocyclische Amine, beispielsweise Triäthylamin, Trimethylamin, Dimethylanilin, Dimethylbenzylamin und Pyridin.

Die Reaktionstemperatur kann innerhalb eines größeren Bereichs variiert werden. Im allgemeinen arbeitet man bei Verfahrensvariante a) zwischen 10 und 100°C, vorzugsweise bei 20 bis 60°C und bei Verfahrensvariante b) zwischen 10 und 150°C, vorzugsweise bei 110 bis 130°C.

Die Umsetzung läßt man im allgemeinen bei Normaldruck ablaufen.

Die Verfahren zur Herstellung der erfindungsgemäßen Verbindungen werden bevorzugt unter Mitverwendung geeigneter Lösungsoder Verdünnungsmittel durchgeführt. Als solche kommen praktisch alle inerten organischen Solventien infrage. Hierzu gehören insbesondere aliphatische und aromatische, gegebenenfalls chlorierte Kohlenwasserstoff, wie Benzol, Toluol, Xylol, Benzin, Methylenchlorid, Chloroform, Tetrachlorkohlenstoff, Chlorbenzol, oder Äther, z.B. Diäthyl- und Dibutyläther, Dioxan, ferner Ketone, beispielsweise Aceton, Methyläthyl-, Methylisopropyl- und Methylisobutylketon, außerdem Nitrile, wie Aceto- und Propionitril sowie Dimethylformamid.

Die neuen Verbindungen fallen meist in Form von Ölen an, die sich zum Teil nicht unzersetzt destillieren lassen, jedoch durch sogenanntes "Andestillieren", d.h. durch längeres Erhitzen unter vermindertem Druck auf mäßig erhöhte Temperaturen von den letzten flüchtigen Anteilen befreit und auf diese Weise gereinigt werden. Zu ihrer Charakterisierung dient der Brechungsindex.

Wie bereits mehrfach erwähnt, zeichnen sich die erfindungsgemäßen Cyclobutancarbonsäurederivate durch eine hervorragende insektizide Wirksamkeit aus. Sie sind dabei den vorbekannten Cyclopropancarbonsäurederivaten, die eine ähnliche Wirkungsrichtung besitzen, überlegen.

Die Wirkstoffe zeigen gute Wirksamkeit gegen Schädlinge, die auf dem veterinärmedizinischen Sektor vorkommen.

Die Wirkstoffe eignen sich bei guter Pflanzenverträglichkeit und günstiger Warmblütertoxizität zur Bekämpfung von tierischen Schädlingen, insbesondere Insekten, die in der Landwirtschaft, in Forsten, im Vorrats- und Material- schutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.
Aus der Ordnung der Diplopoda z.B. Blaniulus guttulatus.
Aus der Ordnung der Chilopoda z.B. Geophilus carpophagus, Scutigera spec.
Aus der Ordnung der Symphyla z.B. Scutigerella immaculata.
Aus der Ordnung der Thysanura z.B. Lepisma saccharina.
Aus der Ordnung der Collembola, z.B. Onychiurus armatus.
Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanaplus differentialis, Schistocerca gregaria.
Aus der Ordnung der Dermaptera z.B. Forficula auricularia.
Aus der Ordnung der Isoptera z.B. Reticulitermes spp..
Aus der Ordnung der Anoplura z.B. Phylloxera vastatrix, Pemphigus spp., Pediculus humanus corporis, Haematopinus spp., Linognathus spp.
Aus der Ordnung der Mallophaga z.B. Trichodectes spp., Damalinea spp.
Aus der Ordnung der Thysanoptera z.B. Hercinothrips femoralis, Thrips tabaci.
Aus der Ordnung der Heteroptera z.B. Eurygaster spp., Dysdercus intermedius, Piesma quadrata, Cimex lectularius, Rhodnius prolixus, Triatoma spp.
Aus der Ordnung der Homoptera z.B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp., Psylla spp.,
Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp., Bucculatrix thurberiella, Phyllocnistis citrella, Agrotis spp., Euxoa spp., Feltia spp., Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Cacoecia podana, Capua reticulana, Choristoneura fumiferana, Clysia ambiguella, Homona magnanima, Tortrix viridana.
Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.
Aus der Ordnung der Hymenoptera z.B. Diprion spp., Hoplocampa spp., Lasius spp., Monomorium pharaonis, Vespa spp.
Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobasca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.
Aus der Ordnung der Siphonaptera z.B. Xenopsylla cheopis, Ceratophyllus spp.

Die Wirkstoffe können in die üblichen Formulierungen übergeführt werden, wie Lösungen, Emulsionen, Spritzpulver, Suspensionen, Pulver, Stäubemittel, Schäume, Pasten, lösliche Pulver, Granulate, Aerosole, Suspensions-Emulsionskonzentrate, Saatgutpuder, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen infrage: Aromaten, wie Xylol, Toluol, oder Alkylnaphthaline, chlorierte Aromaten oder chlorierte aliphatische Kohlenwasserstoffe, wie

Chlorbenzole, Chloräthylene oder Methylenchlorid, aliphatische Kohlenwasserstoffe, wie Cyclohexan oder Paraffine, z.B. Erdölfraktionen, Alkohole, wie Butanol oder Glycol sowie deren Äther und Ester, Ketone, wie Aceton, Methyläthylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgas, wie Halogenkohlenwasserstoffe sowie Butan, Propan, Stickstoff und Kohlendioxid; als feste Trägerstoffe: natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate: gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehle, Kokosnußschalen, Maiskolben und Tabakstengel; als Emulgier- und/oder schaumerzeugende Mittel: nichtionogene und anionische Emulgatoren, wie Polyoxyäthylen-Fettsäure-Ester, Polyoxyäthylen-Fettalkohol-Äther, z.B. Alkylaryl-polyglykol-äther, Alkylsulfonate, Alkylsulfate, arylsulfonate sowie Eiweißhydrolysate; als Dispergiermittel: z.B. Lignin-Sulfitablaugen und Methylcellulose.

Es können in den formulierungen Haftmittel wie Carboxymethylcellulose natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanblau und organische Farbstoffe, wie Alizarin-, Azo-Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90%.

Die Anwendung der erfindungsgemäßen Wirkstoffe erfolgt in Form ihrer handelsüblichen Formulierungen und/oder den aus diesen Formulierungen bereiteten Anwendungsformen.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 100 Gew.-% Wirkstoff, vorzugsweise zwischen 0,01 und 10 Gew.-% liegen.

Die Anwendung geschieht in einer den Anwendungsformen angepaßten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkali-stabilität auf gekälkten Unterlagen aus.

Die Anwendung der erfindungsgemäßen Wirkstoffe geschieht im Veterinärsektor in bekannten Weise, wie durch orale Anwendung in Form von beispielsweise Tabletten, Kapseln, Tränken, Granulaten, durch dermale Anwendung in Form beispielsweise des Tauchens (Dippen), Sprühens (Sprayen), Aufgießens (pour-on and spot-on) und des Einpuderns sowie durch parenterale Anwendung in Form beispielsweise der Injektion.

## Beispiel

Residual-Test

Testtiere: Musca domestica (gegen Phosphorsäureester resistent) Aedes aëgypti
Zahl der Testtiere: etwa 25
Netzpulver-Grundsubstanz bestehend aus:

3% diisobutylnaphthalin-1-sulfonsaures Natrium
6% Sulfitablauge, teilweise kondensiert mit Anilin
40% kochdisperse Kieselsäure CaO-haltig
51% Kolloid-Kaolin

Zur Herstellung einer zweckmäßigen Wirkstoffzubereitung vermischt man innig 1 Gewichtsteil Wirkstoff mit 9 Gewichtsteilen Netzpulver-Grundsubstanz. Das so erhaltene Spritzpulver wird in 90 Teilen Wasser suspendiert.

Die Wirkstoffsuspension wird in einer Aufwandmenge von 0,2 g Wirkstoff pro $m^2$ auf Unterlagen aus Sperrholz aufgespritzt.

Die Spritzbeläge werden in bestimmten Zeitabständen auf ihre biologische Wirkung geprüft.

Zu diesem Zweck bringt man die angegebene Anzahl der Testtiere auf die behandelten Unterlagen. Über die Testtiere wird ein flacher Zylinder gestülpt, der an seinem oberen Ende mit einem Drahtgitter verschlossen ist, um die Tiere am Entweichen zu hindern. Nach 8 Stunden Verweilzeit der Tiere auf der Unterlage wird die Abtötung der Versuchtiere in % bestimmt.

Bei diesem Test zeigen z.B. die folgenden Verbindungen der Herstellungsbeispiele bessere Wirkung als der Stand der Technik: 1, 2

Herstellungsbeispiele

Beispiel 1

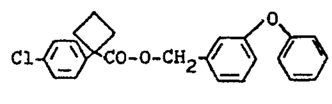

a) 21,1 g (0,1 Mol) 1-(4-Chlorphenyl)-cyclobutancarbonsäure werden mit 200 ml Thionylchlorid und einer katalytischen Menge Dimethylformamid 2 Stunden unter Rückfluß gekocht. Überschüssiges Thionylchlorid wird abgezogen, der Rückstand mit 200 ml Toluol aufgenommen und unter leichter Kühlung in eine Lösung von 20 g (0,1 Mol) 3-Phenoxy-benzylalkohol und 15,8 g (0,2 Mol) Pyridin in 200 ml Toluol getropft und 5 Stunden bei Raumtemperatur gerührt. Dann wird mit Wasser, verdünnter Salzsäure und verdünnter Natronlauge neutral gewaschen, getrocknet, das Lösungsmittel abgezogen und der Rückstand andestilliert. Man erhält so 27,5 g 1-(4-Chlorphenyl)-cyclobutancarbonsäure-(3-phenoxy)-benzylester in Form eines hellgelben Oles mit dem Brechungsindex $n_D^{20}$: 1,5834.

b) 21,1 g (0,1 Mol) 1-(4-Chlorphenyl)-cyclobutancarbonsäure werden in 250 ml Dimethylformamid gelöst, mit einer Lösung von 5,4 g (0,1 Mol) Natriummethylat in 50 ml Dimethylformamid versetzt und am Rotationsverdampfer bis auf 150 ml eingeengt. Danach gibt man 36,5 g (0,1 Mol) 3-Phenoxybenzyltriäthylammoniumbromid zu, rührt 6 Stunden bei 130°C, kühlt das Lösungsmittel weitgehend ab und nimmt den Rückstand mit Methylenchlorid auf. Danach wäscht man die organische Phase mit verdünnter Natronlauge, dann mit Wasser neutral, trocknet sie über Natriumsulfat, engt ein und destilliert den Rückstand an. Es bleiben 26,8 g (68% der Theorie) eines hellgelben Öles mit einem Brechungsindex von $n_D^{20}$: 1,5820 zurück.

Beispiel 2

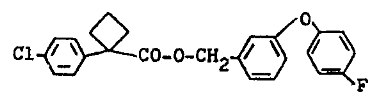

10,5 g (0,05 Mol) 1-(4-Chlorphenyl)-cyclobutancarbonsäure mit 100 ml Thionylchlorid und einer katalytischen Menge Dimethylformamid 2 Stunden unter Rückfluß gekocht. Überschüssiges Thionylchlorid wird abgezogen, der Rückstand mit 100 ml Toluol aufgenommen und unter Kühlung zu einer Lösung von 10,9 g (0,05 Mol) 3-(4-Fluorphenoxy)-benzylalkohol und 7,9 g (0,1 Mol) Pyridin in 100 ml Toluol getropft. Danach wird 5 Stunden bei Raumtemperatur gerührt, dann mit Wasser, verdünnter Salzsäure, verdünnter Natronlauge neutral gewaschen, getrocknet, das Lösungsmittel abgezogen und der Rückstand destilliert. Es werden 17,8 g (87% der Theorie) eines gelben Öles mit dem Brechungsindex $n_D^{20}$: 1,5527 an 1-(4-Chlorphenyl)-cyclobutancarbonsäure-3-(4-fluorphenoxy)-benzylester erhalten.

Analog kann hergestellt werden:

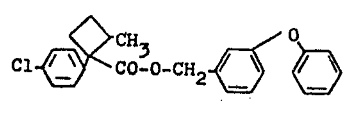

**Patentansprüche**

1. Cyclobutancarbonsäurederivate der Formel (I)

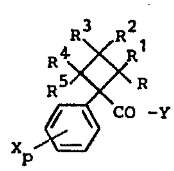

(I)

in welcher

X für gleiche oder verschiedene Reste aus der Gruppe Wasserstoff, Halogen, Cyan, Nitro, niederes Alkyl, Alkenyl, Alkoxy, Alkylmercapto, Alkylsulfoxy, Alkoxyalkyl, niederes Halogenalkyl, Halogenalkoxy, Halogenalkylmercapto, Aryl oder Aryloxy oder zwei benachbarte Reste X gemeinsam für Methylendioxy, Trimethylen oder Tetramethyl stehen, steht und

R bis $R^5$ gleich oder verschieden sind und für Wasserstoff oder niederes Alkyl stehen und

Y für einen Alkoholrest steht, der üblicherweise bei natürlichen und synthetischen Pyrethroiden Verwendung findet und

p für eine ganze Zahl von 1—5 steht.

2. Verfahren zur Herstellung der Cyclobutancarbonsäurederivaten gemäß Anspruch 1, dadurch gekennzeichnet, daß man eine Cyclobutancarbonsäure der Formel (II)

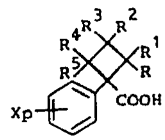

(II)

in welcher

R bis $R^5$, X und p die oben angegebene Bedeutung haben, oder ihr reaktionsfähiges Derivat mit einem bei natürlichen und synthetischen Pyrethroiden üblicherweise Verwendung findenden Alkohol der Formel (III)

Y—H (III)

in welcher

Y die oben angegebene Bedeutung hat, oder dessen reaktionsfähigem Derivat umsetzt.

3. Insektizide Mittel, gekennzeichnet durch einen Gehalt an mindestens einem Cyclobutancarbonsäurederivat gemäß Anspruch 1.

4. Verfahren zur Bekämpfung von Insekten, dadurch gekennzeichnet, daß man Cyclobutancarbonsäurederivate gemäß Anspruch 1 auf Insekten und/oder ihren Lebensraum einwirken läßt.

5. Verfahren zur Herstellung insektizider Mittel, dadurch gekennzeichnet, daß man Cyclobutancarbonsäurederivate gemäß Anspruch 1 mit Streckmitteln und/oder oberflächenaktiven Stoffen vermischt.

## Claims

1. Cyclobutanecarboxylic acid derivatives of the formula (I)

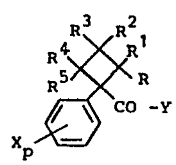

(I)

in which

X represents identical or different radicals from the group consisting of hydrogen, halogen, cyano, nitrol, lower alkyl, alkenyl, alkoxy, alkylmercapto, alkylsulphoxy, alkoxyalkyl, lower halogenoalkyl, halogenoalkoxy, halogenoalkylmercapto, aryl or aryloxy or two adjacent radicals X together represent methylenedioxy, trimethylene or tetramethylene and

R to $R^5$ are identical or different and represent hydrogen or lower alkyl and

Y represents an alcohol radical which is customarily used in the case of natural and synthetic pyrethroids and

p represents an integer from 1 to 5.

2. Process for the preparation of the cyclobutanecarboxylic acid derivatives according to Claim 1, characterised in that a cyclobutanecarboxylic acid of the formula (II)

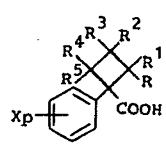

(II)

in which

R to $R^5$, X and p have the meaning indicated above, or a reactive derivative thereof, is reacted with an alcohol, customarily used in the case of natural and synthetic pyrethroids, of the formula (III)

Y—H (III)

in which

Y has the meaning indicated above, or a reactive derivative thereof.

3. An insecticide, characterised in that it contains at least one cyclobutanecarboxylic acid derivative according to claim 1.

4. A method of combating insects, characterised in that cyclobutanecarboxylic acid derivatives according to claim 1 are allowed to act on insects and/or their environment.

5. A process for the preparation of insecticides, characterised in that cyclobutanecarboxylic acid derivatives according to claim 1 are mixed with extenders and/or surface-active compounds.

**Revendications**

1. Dérivés d'acides cyclobutane-carboxyliques répondant à la formule (I):

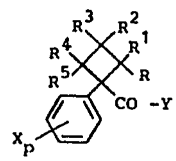

(I)

dans laquelle

X représente des radicaux identiques ou différents choisis parmi le groupe comprenant un atome d'hydrogène, un atome d'halogène, un groupe cyano, un groupe nitro, un groupe alkyle inférieur, un groupe alcényle, un groupe alcoxy, un groupe alkylmercapto, un groupe alkylsulfoxy, un groupe alcoxyalkyle, un groupe halogénoalkyle inférieur, un groupe halogénoalcoxy, un groupe halogénoalkylmercapto, un groupe aryle ou un groupe aryloxy, ou encore deux radicaux X voisins pris ensemble représent un group methylenedioxy, un groupe triméthylène ou un groupe tétramèthylene,

R à $R^5$ sont identiques ou différents et représentent chacun un atome d'hydrogène ou un groupe alkyle inférieur,

Y représente un radical alcool que l'on utilise habituellement dans les pyréthroides naturels et synthetiques, et

p représente un nombre entier de 1 à 5.

2. Procédé de préparation de dérivés d'acides cyclobutane-carboxyliques suivant la revendication 1 caractérisé en ce qu'on fait réagir un acide cyclobutanecarboxylique de formule (II):

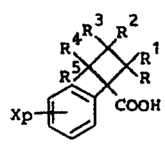

(II)

dans laquelle

R à $R^5$, X et p ont les significations indiquées ci-dessus, ou un dérivé réactif de cet acide, avec un alcool habituellement utilisé dans les pyréthroides naturels et synthétiques et répondant à la formule (III)

$$Y—H \qquad (III)$$

dans laquelle

Y a la signification indiquée ci-dessus, ou avec un dérivé réactif de cet alcool.

3. Agent insecticide, caractérisé en ce qu'il contient au moins un dérivé d'acide cyclobutane-carboxylique suivant la revendication 1.

R à $R^5$, X et p ont les significations indiquées ci-dessus, ou un dérivé réactif de cet acide, avec un alcool habituellement utilisé dans les pyréthroides naturels et synthétiques et répondant à la formule (III):

Y a la signification indiquée ci-dessus, ou avec un dérivé réactiv de cet alcool.

4. Procédé en vue de combattre les insectes, caractérisé en ce qu'on fait agir des dérivés d'acides cyclobutane-carboxyliques suivant la revendication 1 sur les insectes et/ou leur biotope.

5. Procédé de préparation d'agents insecticides, caractérisé en ce qu'on a mélange des dérivés d'acides cyclobutane-carboxyliques suivant la revendication 1 avec des diluants et/ou des substances tensio-actives.